# EUROPEAN PATENT APPLICATION

(11) **EP 0 718 021 A2**
(43) Date of publication of application: **26.06.1996**
(21) Application number: 95460043.3
(22) Date of filing: 15.12.1995
(51) Int. Cl.: B01D 27/08

(54) **Replaceable spin-on filter with molded unitary nutplate**

(30) Priority: 21.12.1994 US 360399
(71) Applicant: FLEETGUARD, INC., Nashville, Tennessee 32717 (US)
(72) Inventor: Reullou, Yves, F-29170 St. Evarzec (FR)
(74) Representative: Vidon, Patrice

(57) **Abstract**

A fluid filter assembly for pressurized fluids includes a simplified construction involving the use of a molded, integral nutplate fabricated out of a glass reinforced nylon material. The molded nutplate is used in combination with an outer housing and a generally cylindrical filter cartridge which is positioned within the housing. The nutplate provides flow inlet apertures, a flow exit conduit and an inserted stem extending into the filter cartridge and being designed and arranged so as to establish a fluid-tight interface with a molded endplate disposed over the upper end of the filter cartridge. The lower end of the filter cartridge employs a molded endplate design which includes projecting feet to position the filter cartridge within the outer housing and to establish the desired axial depth. The design, including the molded nutplate, substantially reduces the number of component parts required for prior art filter assembly designs and results in fewer processing steps being required. The specific configuration of the nutplate and the manner in which it is secured to the outer housing causes all pressurized fluids to be contained beneath the nutplate. As a result, pressurized fluid cannot pass and create a downward load on the outer diameter of the nutplate.

## Description

### BACKGROUND OF THE INVENTION

The present invention relates in general to fluid filtering devices which include an outer shell or housing and an interior filtering element. More specifically the present invention pertains to a replaceable, spin-on filter in which the outer shell of the filter has a unique rolled seam design cooperating with a unique nutplate design which is made as a unitary member out of injection molded, glass reinforced nylon.

In the design of a spin-on fluid filter for pressurized flow applications, a number of concerns have to be addressed. First, there is-a desire to have a filter assembly which is strong and reliable and one which can be easily and securely attached to its corresponding mounting pad or base. The design needs to provide a filter assembly which receives the incoming fluid and directs it through the filter element to a flow exit location. It is important to keep the unfiltered (dirty) fluid isolated from the filtered (clean) fluid and to prevent any fluid leakage from the filter assembly.

In order to try and satisfy each of these design objectives, traditional design wisdom has focused on a filter assembly comprised of a number of different component pieces, several of which are metal. For example, a typical prior art construction for a spin-on filter would include, at a minimum, an outer shell, a nutplate, an upper endplate, a lower endplate, a filter medium, a centertube, a spring, a first rubber gasket between the nutplate and upper endplate, a retainer, and a second rubber gasket positioned within the retainer. In this typical prior art construction, the outer shell, nutplate, upper and lower endplates, and retainer are all made out of a metal, such as steel.

This described prior art design has a number of drawbacks from the standpoint of cost (material and labor) and the extent to which the expended filter assembly can be burned for disposal in lieu of being added to a landfill. It would therefore be an improvement to the current design wisdom to provide a spin-on filter assembly which is less expensive to manufacture, considering both material costs and labor, and a design with less unburned weight (i.e., where a greater portion of the assembly can be disposed of by burning).

The present invention provides an improved spin-on filter assembly which has less material and lower labor costs than a comparable prior art design and less unburned weight. The lower weight design of the present invention focuses on the use of a molded, unitary nutplate which is made through an injection molding process and made of glass reinforced nylon. The nutplate is strengthened by means of eight web-like ribs that integrally interconnect the side of a centrally threaded nipple, sidewall and bottom wall. The design of the nutplate of the present invention includes unique surfaces and shapes which are provided to sealingly engage the filter element without the need for an O-ring or other compressed gaskets in order to achieve a sealed interface. One of the unique aspects of the present invention is the rolled seam of the steel shell which enables all of the pressurized fluids to be contained under the nylon nutplate.

Over the years various filter assembly designs have been conceived of for a variety of fluid filtering applications. In certain cases the designs involve the use of molded components and in this regard, these earlier designs may be pertinent to the present invention. The following listing of United States patents is believed to be a representative sampling of these earlier filter assembly designs:

| PATENT NO. | PATENTEE | ISSUE DATE |
|---|---|---|
| 3,722,691 | Francois | Mar. 27, 1973 |
| 4,992,166 | Lowsky et al. | Feb. 12, 1991 |
| 5,171,430 | Beach et al. | Dec. 15, 1992 |
| 5,182,015 | Lee | Jan. 26, 1993 |

### SUMMARY OF THE INVENTION

A replaceable fluid filter assembly for filtering pressurized fluid according to one embodiment of the present invention comprises an outer shell closed at one end, open at an opposite end, and defining a hollow interior therebetween; a filter cartridge positioned within the outer shell and including a substantially cylindrical filter medium having a first end and an opposite second end, a lower endplate assembled across the second end, and an upper endplate assembled to the first end; and a molded, integral nutplate secured to the open opposite end of the outer shell and being constructed and arranged to assemble into the upper endplate with a liquid-tight fit, the nutplate defining a flow inlet and a flow exit whereby liquid entering the fluid filter assembly by way of the flow inlet flows through the filter medium and exits the assembly by way of the flow exit.

One object of the present invention is to provide an improved replaceable fluid filter assembly.

Related objects and advantages of the present invention will be apparent from the following description.

### BRIEF DESCRIPTION OF THE DRAWINGS

FIG. 1 is side elevational view in full section of a replaceable, fluid filter assembly which is constructed and arranged according to a typical prior art embodiment.

FIG. 2 is a side elevational view in full section of a replaceable fluid filter assembly according to a typical embodiment of the present invention.

FIG. 3 is a perspective view of the FIG. 2 replaceable, fluid filter assembly.

### DESCRIPTION OF THE PREFERRED EMBODIMENT

For the purposes of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

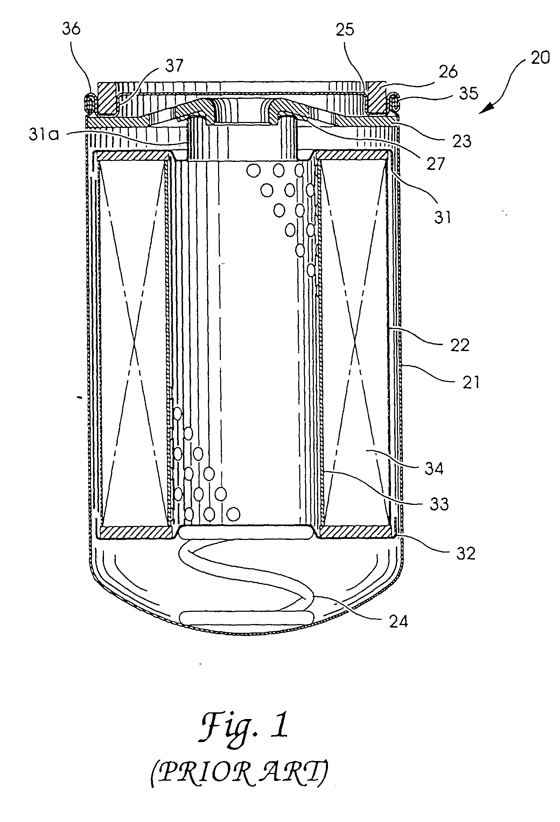

Referring to FIG. 1 there is illustrated an example of a traditional or typical prior art fluid filter assembly 20 which represents a higher cost, less desirable design as compared to the replaceable, fluid filter assembly according to the present invention. Assembly 20 includes an outer metal shell 21, filter cartridge 22, metal nutplate 23, spring 24, steel retainer 25, annular gasket 26, and annular gasket 27. The filter cartridge 22 includes an upper steel endplate 31, a lower steel endplate 32, centertube 33, and filter medium 34. A thickness of PLASTISOL adhesive is used at each end of the filter medium to seal closed the ends of the filter medium and to attach the upper and lower endplates to the filter medium. The outer metal shell 21 includes a formed upper edge 35 which securely interlocks with the formed peripheral edge 36 on the steel retainer 25. A suitable adhesive must be used in this rolled joint in order to ensure a liquid-tight interface.

The steel retainer 25 is formed with a receiving, U-shaped channel 37 which is spot welded at spaced annular locations to the upper surface of steel nutplate 23. The upwardly opening interior of channel 37 receives annular gasket 26. The inner portion of the nutplate assembles over the substantially cylindrical, raised portion 31a of the upper endplate 31 at which point gasket 27 is positioned between the curved and formed upper edge of portion 31a and the nutplate 23. The lower endplate 32 extends completely over the hollow interior of the filter medium/centertube assembly so as to close off this possible exit path to the fluid being filtered. Spring 24 which is positioned between the base of shell 21 and the lower endplate 32 acts against the lower endplate so as to properly position the filter cartridge 22 axially within the shell.

In order to fabricate the fluid filter assembly of FIG. 1, it is necessary to provide, at a minimum, twelve separate components, and to assemble these components in the manner described. One welding operation is required in order to spot weld the retainer 25 to the nutplate 23. Processing steps are also required to introduce the seam adhesive into the interlocked joint for the shell 21 and retainer 25 and to assemble gasket 27. These additional fabrication steps are each eliminated by the present invention which incorporates into its design a unique upper end assembly including a molded nutplate.

A further feature of the prior art construction which needs to be recognized is that with a spot welded assembly of the retainer to the nutplate, this joint is not a liquid-tight interface. As a consequence, pressurized fluid is free to pass under the retainer 25 and above nutplate 23 to be stopped only by the liquid-tight interface between the shell and retainer. This design permits the fluid pressure to equalize on both the top and bottom of the nutplate. This is regarded as an inferior design relative to the present invention which precludes having any fluid pressure on the upper outer edge of the nutplate. Without any fluid pressure above the nutplate the present invention effectively achieves a stiffer nutplate and an increase in burst (pressure) performance.

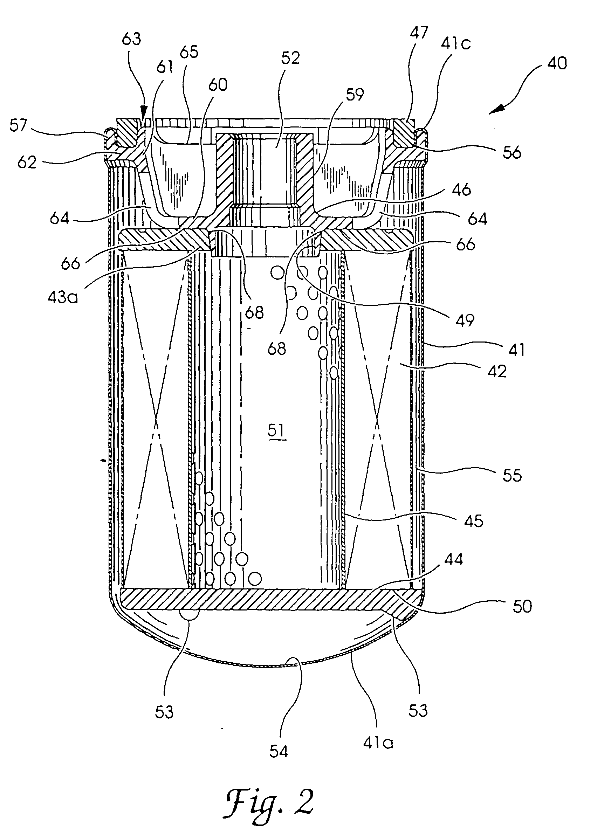

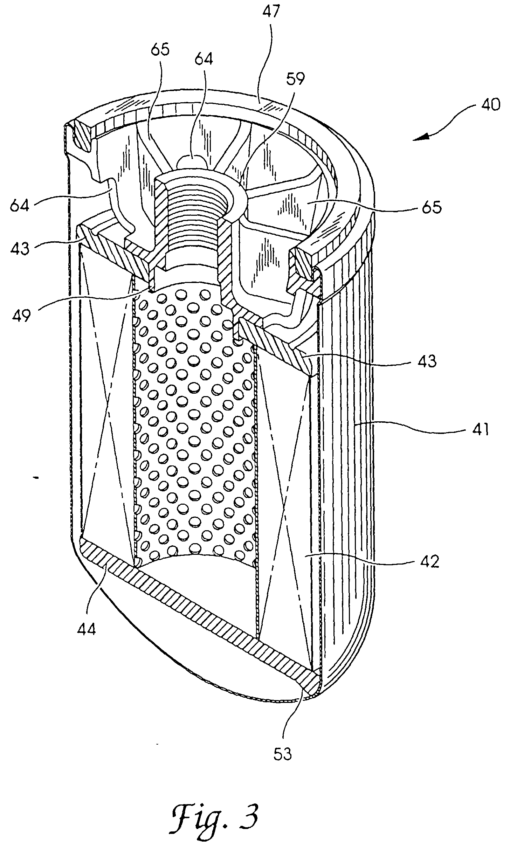

Referring now to FIGS. 2 and 3, a fluid filter assembly 40 according to the present invention is illustrated. In FIG. 2 assembly 40 is illustrated as a front elevational view, in full section. FIG. 3 is a perspective view, also in full section but more representative of the annular and cylindrical configuration of assembly 40 and its various component parts. A comparison between FIG. 1 and FIG. 2 will readily reveal a substantially different design approach and a substantial reduction in the number of component parts involved with the FIG. 2 construction as compared to the FIG. 1 design.

Fluid filter assembly 40 includes outer shell 41, filter medium 42, molded endcaps 43 and 44, centertube 45, molded nutplate 46, and base gasket 47. The outer shell 41 includes a closed, curved base 41a, a substantially cylindrical sidewall 41b and an upper open end 41c which is substantially circular. Nutplate 46 is molded as a one-piece, unitary member out of glass reinforced nylon. The upper endcap 43 has an annular ring shape and its inside diameter size is designed for a tight and secure fit around the depending, generally cylindrical annular wall 49 of nutplate 46. As illustrated, the inwardly directed radial lip 43a extends inwardly beyond centertube 45 so as to abut up against wall 49 with an interference fit. The lower endcap 44 is an annular disc which is free of any perforations or open areas and as such is suitable to seal across the lower end 50 of the filter medium 42. Lower endcap 44 sealingly extends across the open interior 51 of the generally cylindrical filter medium so as to ensure that all of the filter fluid exits the assembly by way of the generally cylindrical flow exit 52 which is concentrically formed in the nylon nutplate 46.

The lower endcap 44 is formed with a minimum of three compression feet 53 which are equally spaced around the outer peripheral edge of endcap 44. Each compression foot 53 has a slightly tapered shape and extends in the direction of the closed end base 41a of the outer shell 41. Due to the concave curvature of the closed end base 41a, the compression feet become wedged into contact with the inner surface 54 of the closed end base when the filter cartridge is installed in the outer shell. As a result of this assembly technique, the filter cartridge (filter medium, upper and lower endplates, and centertube) is concentrically centered in the outer shell and positioned at the desired axial depth. An annular clearance space 55 is thus created between the filter cartridge and the generally cylindrical sidewall 41b of the outer shell 41.

The design of nutplate 46 contributes substantially to the overall lower cost of fluid filter assembly 40 as compared to a traditional prior art fluid filter assembly 20, as illustrated in FIG. 1. Nutplate 46 is a single, unitary member which is, in the preferred embodiment, injection molded out of glass reinforced nylon. As to other possible materials which can be used for nutplate 46, the options will be influenced to some extent by the fluid which is being filtered and to some extent by the pressure levels which are present in assembly 40. After assembly of the filter cartridge and nutplate into the outer shell, the upper, outer edge 56 of the shell at open end 41c is tightly and securely formed over and completely around the outermost portion 57 of the nutplate so as to anchor these two components together as a single unit. When this step is performed, the filter cartridge is lightly compressed between the nutplate and the base of the outer shell. This allows the elimination of the prior art spring.

Nutplate 46 includes a generally cylindrical, internally threaded nipple 59 which defines flow exit 52. Integrally connected with nipple 59 is a base, which is defined by bottom wall 60, and a sidewall 61. The uppermost and outermost portions 62 of the sidewall 61, based upon the FIG. 2 orientation, is formed with an upwardly opening U-shaped channel 63 which is constructed and arranged to receive sealing compression gasket 47. Sidewall 61 is arranged with and defines a plurality of spaced-apart flow apertures 64 which provide a pathway for the entering fluid to flow into and around annular clearance space 55. In the preferred embodiment there are eight apertures on 45 degree spacing.

Integrally molded as part of nutplate 46 are eight, equally spaced, web-like ribs 65. Each rib 65 extends in a radially outward direction from the outer surface of nipple 59. Further, each rib 65 is positioned on an approximate 45 degree circumferential spacing and each rib is integral with the bottom wall 60 and with the annular sidewall 61. Centrally positioned between each pair of adjacent ribs 65 is one of the spaced-apart flow apertures. This integrally molded and interconnected configuration of the eight ribs 65 with the nipple 59, bottom wall 60, and sidewall 61 results in a very strong and rigid unitary member that replaces the prior art steel nutplate assembly which is formed from several metallic component pieces. The design of the nutplate 46 and its arrangement within assembly 40 is such that the filter assembly 40 has the necessary strength to withstand the high pressures which are seen inside the fluid filter assembly 40.

The bottom wall 60 includes and is integral with depending annular wall 49 which is generally cylindrical and substantially perpendicular to the lower, substantially-flat surface 66 of bottom wall 60. The corner between surface 66 and wall 49 is an angled corner in cross-section and receives the annular corner edge 68 of upper endcap 43. The fit of wall 49 into the upper endplate 43 radially sealingly engages the annular opening (inside diameter) in the resilient molded upper endplate without the need for any O-ring or other compressed sealing gaskets.

The design of molded nutplate 46, coupled with the other design changes which it enables, results in a filter assembly 40 which saves on both material costs and labor. The total net weight is less than a traditional prior art filter assembly (320 grams versus 380 grams) and the unburned weight is less (160 grams versus 320 grams). There are fewer component pieces in assembly 40 as compared to assembly 20 and thus fewer potential problems with fit and function and fewer items to inventory and inspect.

The design of fluid filter assembly 40, according to the present invention, is such that it eliminates the need for any welding operation and the need for any joint sealant or any separate interior rubber gasket. The nutplate 46 is injection molded and requires no further machining operations after molding. This style of composite nutplate optimizes the characteristics of the material and the dynamic behavior of the fluid filter assembly. The result is a product which demonstrates superior static and dynamic performance to that of the traditional steel-component filter assembly as represented by assembly 20 in FIG. 1. The superior static and dynamic performance of the present invention is related to both the actual design of the upper end assembly (nutplate) and the rolled seam assembly of the steel shell with the outermost portion 57 of the nutplate. As illustrated, the rolled shell seam design of the present invention is such that all pressurized fluids are contained under the nylon nutplate 46. On the top, the pressurized fluids are trapped by the compression gasket 47. As a result, the pressurized fluid cannot pass through or between and create a downward load on the outer diameter of the nutplate 46. The result is an effectively stiffer nutplate as compared to the prior art design of FIG. 1 and a corresponding increase in burst (pressure) performance.

In a traditional design as that represented by FIG. 1, the pressurized fluid is free to pass under the gasket and retainer assembly which is only spot welded to the nutplate and to be stopped only by the interlocking shell/retainer joint. Consequently, with a traditional filter design, the fluid pressure is equalized on both the top and the bottom surfaces of the nutplate.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected.

## Claims

1. A replaceable fluid filter assembly comprising:
an outer shell closed at one end, open at an opposite end and defining a hollow interior therebetween;
a filter cartridge positioned within said outer shell and including a substantially cylindrical filter medium having a first end and an opposite second end, said filter cartridge further including a lower endplate sealingly assembled across said second end and an annular upper endplate sealingly assembled to said first end; and
a molded, integral nutplate secured to the open opposite end of said outer shell and being constructed and arranged to assemble into said upper endplate with a liquid-tight fit so as to establish a flow path therewith, said nutplate defining a flow inlet and a flow exit whereby liquid entering said assembly via said flow inlet will flow through said filter medium and exit said assembly via said flow exit.

2. The fluid filter assembly of claim 1 wherein the flow exit of said nutplate is substantially centered in said nutplate and said nutplate including a depending substantially cylindrical wall which is press-fit into said upper endplate.

3. The fluid filter assembly of claim 2 wherein said nutplate includes a base portion, a surrounding sidewall, and a plurality of webs which are integrally joined on three sides to said flow exit, said base portion and said sidewall.

4. The fluid filter assembly of claim 3 wherein said lower endplate is a circular disc which is designed and arranged to seal closed the second end of said filter medium.

5. The fluid filter assembly of claim 4 wherein said outer housing and said nutplate are securely joined together by means of a rolled seam whereby said filter cartridge is axially compressed within said outer housing.

6. The fluid filter assembly of claim 1 wherein said lower endplate is a circular disc which is designed and arranged to seal closed the second end of said filter medium.

7. The fluid filter assembly of claim 6 wherein said outer housing and said nutplate are securely joined together by means of a rolled seam whereby said filter cartridge is axially compressed within said outer housing.

8. The fluid filter assembly of claim 1 wherein said nutplate is made from a glass reinforced nylon material.

9. The fluid filter assembly of claim 1 wherein the annular ring shape of said upper endplate defines a substantially concentric clearance hole.

10. A filter assembly for liquids comprising:
a substantially cylindrical, hollow outer housing which is closed at a first end and open at an opposite, second end;
a substantially cylindrical filter cartridge positioned within said outer housing, said filter cartridge including a hollow, substantially cylindrical filter element closed at a first end by a first molded annular endplate and closed across an opposite, second end by a second molded endplate; and
a molded, integral upper end unit securely and sealingly assembled to said outer housing and defining an annular stem and coaxial therewith a flow exit conduit, said annular stem being inserted into said first molded endplate so as to establish a liquid-tight assembly therewith, said upper end unit being constructed and arranged to further define a flow inlet and to cause entering fluid flow into said filter assembly to flow around and through said filter element and exit via said flow exit conduit.

11. The fluid filter assembly of claim 10 wherein the flow exit conduit of said upper end unit is substantially centered in said upper end unit and said annular stem being press-fit into said first molded endplate.

12. The fluid filter assembly of claim 11 wherein said upper end unit includes a base portion, a surrounding sidewall, and a plurality of webs which are integrally joined on three sides to said flow exit, said base portion and said sidewall.

13. The fluid filter assembly of claim 12 wherein said second molded endplate is a circular disc which is designed and arranged to seal closed the second end of said filter medium.

14. The fluid filter assembly of claim 13 wherein said outer housing and said upper end unit are securely joined together by means of a rolled seam whereby said filter cartridge is axially compressed within said outer housing.

15. The fluid filter assembly of claim 14 wherein said upper end unit is made from a glass reinforced nylon material.

16. The fluid filter assembly of claim 10 wherein said second molded endplate includes a plurality of compression feet which abut up against said closed first end.

17. A filter assembly for liquids comprising:
an outer housing have a generally cylindrical body and a curved, closed end portion, said housing having an open end opposite to said closed end portion;
a generally cylindrical filter cartridge positioned into said outer housing through said open end, said filter cartridge including a filter element, a closing endcap secured to a first end of said filter element and an annular ring endcap secured to a second end of said filter element, said closing end cap being placed in abutment with said closed end portion, said filter element defining a hollow center passageway and said annular ring endcap having an inwardly directly annular lip extending into said hollow center passageway; and
a molded, unitary annular endplate attached to said outer housing at a sealed circumferential interface and positioned across said open end, said endplate including an outer wall, a bottom wall and an inner hollow stem, said outer wall, bottom wall and hollow stem defining an annular recessed portion positioned around said hollow stem and between said hollow stem and said outer wall, said annular recessed portion being divided into a plurality of pockets by a plurality of radially and axially extending web-like ribs, each web-like rib being integrally molded to said hollow stem, to said outer wall, and to said bottom wall, and said outer wall defining a plurality of flow apertures, there being at most one flow aperture in each defined pocket.

18. The filter assembly of claim 17 wherein said hollow stem is arranged with an upper threaded portion and a lower insert portion.

19. The filter assembly of claim 18 wherein said upper thread portion axially extends beyond said bottom wall in a first direction toward said open end and said insert portion axially extends beyond said bottom wall in a second direction toward said annular ring endcap.

20. The filter assembly of claim 19 wherein said insert portion is inserted into said annular ring endcap with an interference fit against said annular lip and concurrently therewith, said bottom wall abuts up against said annular ring endcap.
